# EUROPEAN PATENT APPLICATION

(11) **EP 2 031 768 A1**
(43) Date of publication of application: **04.03.2009**
(21) Application number: 07016846.3
(22) Date of filing: 28.08.2007
(51) Int. Cl.: H04B 7/10, H04B 7/02, H04B 7/04

(54) **MIMO system based on cross polarization**

(71) Applicant: Nokia Siemens Networks Oy, 02610 Espoo (FI)
(72) Inventor: Eichinger, Josef Martin, 85464 Neufinsing (DE); Haustein, Thomas, Dr., 14469 Potsdam (DE); Schulz, Egon, Dr., 80993 München (DE); Wolfgang, Zirwas, 81249 München (DE); Zhang, Ying, 81737 München (DE)
(74) Representative: Weidel, Gottfried

(57) **Abstract**

It is described a MIMO system according to which the user devices (UE1, UE2, UE3, UE4) are grouped into a first group of user devices (UE1, UE2, UE3, UE4), communication signals of which are received by a base station unit (4) with a first polarization (H, V) and a second group of user devices (UE1, UE2, UE3, UE4), communication signals of which are received by the base station unit (4) with a second polarization (H, V). The respective polarization of the user devices (UE1, UE2, UE3, UE4) may be initially present or may be adapted to the desired polarization. To this end, a user device (UE1, UE2, UE3, UE4) with an antenna unit (6, 6') with adjustable polarization is described proposed.

## Description

### Field of invention

The present invention relates to the field of a multi-antenna communication system. In particular the present invention relates to a base station unit for communicating with at least two user devices and to a user device for communication with a base station unit.

### Art Background

US 7,145,940 B2 discloses pilot transmission schemes for a multi-antenna system. 2x2 as well as 4x4 MIMO systems are presented. In one pilot transmission scheme, a first set of T scaled pilot symbols is generated with a first training vector and transmitted from T transmit antennas, where T > 1. The training vectors are for different spatial directions. Each MIMO receiver can estimate its MIMO channel based on the first and additional sets of scaled pilot symbols.

There may be a need for an efficient communications system of low complexity.

### Summary of the Invention

This need may be met by the subject matter according to the independent claims. Advantageous embodiments of the present invention are described by the dependent claims.

According to a first aspect of the subject matter disclosed herein there is provided a base station unit for communication with at least two user devices. The base station unit comprises a base controller for grouping the at least two user devices into (1) a first group of a first user devices, communication signals of which are received by the base station unit with a first polarization, and (2) a second group of second user devices, communication signals of which are received by the base station unit with a second polarization different from the first polarization.

A user device, also referred to as user equipment or user terminal, may be e.g. a cellular (mobile) phone, a modem adapter of any kind of computer, such as a personal computer, a notebook, a portable computer such as a personal digital assistant (PDA), a network adapter of any kind of computer, such as the aforementioned computers, etc.

According to an illustrative embodiment of the first aspect, the grouping of the at least two user devices into first and second user devices comprises: (1) selecting user devices, signals of which are received by the base station unit with the first polarization, as the first group of user devices and (2) selecting user devices, signals of which are received by the base station unit with the second polarization, as the second group of user devices. Employing this embodiment, according to a further embodiment the base controller checks whether there are user devices which exhibit with a predetermined exactness the first polarization or the second polarization. If so, no further adaption of the user device antenna is necessary to provide for communication signals arriving from the first user device with the first polarization and to provide for communication signals arriving from the second user device with the second polarization. According to a further illustrative embodiment, which suitable e.g. in case of a high number of user devices and a broad bandwidth, user device grouping might be applied where always 4 resource elements consisting of a number of subcarrier and OFDM symbols (OFDM = Orthogonal Frequency-Division Multiplexing) are grouped together in a way that two resource elements have effectively the first polarization and two recource elements have effectively the second polarization. Subcarriers and OFDM symbols may be of any appropriate kind, e.g. as defined in 3GPP LTE specification. Resource element is a term from the third generation partnership project, long term evolution (3GPP LTE) and defines the smallest unit adressable from the media access control (MAC). The size is 12 subcarriers (SC) times 14 OFDM symbols. This means one resource element is reused four times, i.e. there are not 4 resource elements required. Hence, one recource block consists of 12 neigboring subcarriers in frequency direction and 14 subsequent OFDM symbols in time direction. In LTE, the 14 OFDM symbols correspond to one subframe. The term effective polarization refers to a polarization at the transmitter which effectively behaves like only received in the first polarization or in the second polarization, respectively. Per polarization axis, e.g. per horizontal or vertical polarization axis, two users can be separated by adaptive receive beamforming, i.e. by spatial separation.

According to another illustrative embodiment, the grouping of the at least two user devices into first and second user devices comprises: (1) emitting to the user devices of the first group control signals enabling the user devices of the first group to emit communication signals such that these communication signals arrive at the base station with the first polarization, and (2) emitting to the user devices of the second group control signals enabling the user devices of the second group to emit communication signals such that these communication signals arrive at the base station with the second polarization. This embodiment of adaptive user device polarization allows for compensation of a generally random orientation of the antenna of a user device and/or multipath communication signal propagation. This embodiment is suitable for any number of user devices and does not require a predetermined initial polarization of the user devices.

Enabling the user devices of the first group or the second group to emit communication signals such that these communication signals arrive at the base station with the respective first or second polarization may include providing the user device with polarization information which might be used by the user device to adjust the polarization of its antenna element(s) such that the communication signals of the user device arrive at the base station with the respective first or second polarization.

In an embodiment which employs user device polarization adaption, the grouping of user devices may be performed according to a predetermined grouping scheme. For example, the user devices may be numbered and user devices having an even number may be taken as the first user devices and the user devices having an odd number may be taken as the second user devices.

According to another illustrative embodiment, the base station unit comprises at least two base stations and the grouping of the user devices comprises information exchange between two base stations. For example, the base stations may communicate to the base controller the actual polarization of the user devices sending communication signals to the base station unit. The base controller may select, in response hereto, a user device as belonging to the first group if the polarization of the communication signal received from this user device is close to the first polarization. Likewise, the base controller may select the user devices the received communication signal polarization of which is close to the second polarization as belonging to the second group.

According to still another illustrative embodiment, the base station unit comprises at least two base stations communicating with the base controller.

According to an illustrative embodiment, the base controller is a hardware component. For example, the hardware component may be part of one of the at least two base stations. According to other embodiments, the hardware component may be a separate component. According to another illustrative embodiment, the base controller is a software component which is carried out on one or more microprocessors. For example, the software component may be carried out on one or more microprocessors of one or more of the base stations.

According to a further illustrative embodiment, the base station unit comprises two base stations which are communicating with each other so as to establish a 4x4 multiple input multiple output (MIMO) system. According to an embodiment, two or more user devices build up a virtual MIMO system (e.g. 4x4) where two user devices, a first user device of the first group and a second user device of the second group are transmitting simultaneously on the same time and frequency resource. According to a further embodiment, two base stations, each of which having two antenna elements (AE), support four user devices by space division multiple access (SDMA), where two user devices are supported by one base station and two other user devices are supported by another base station. The four user devices include two first user devices of the first group and two second user devices of the second group. According to an embodiment, by making use of the different polarizations of the first and second user devices, the two base stations are operable almost independently.

According to a second aspect of the subject matter disclosed herein, there is provided a method of operating a base station unit designed for communication with at least two user devices. The method comprises grouping the at least two user devices into (1) a first group of a first user devices, communication signals of which are received by the base station unit with a first polarization and (2) a second group of second user devices, communication signals of which are received by the base station unit with a second polarization different from the first polarization.

According to an illustrative embodiment of the second aspect, the grouping of the at least two user devices into first and second user devices comprises (1) selecting user devices, signals of which are received by the base station unit with the first polarization as the first group of user devices and (2) selecting user devices, signals of which are received by the base station unit with the second polarization as the second group of user devices.

According to another illustrative embodiment of the second aspect, the grouping of the at least two user devices into first and second user devices comprises (1) emitting to the user devices of the first group control signals enabling the user devices of the first group to emit communication signals such that these communication signals arrive at the base station with the first polarization, and (2) emitting to the user devices of the second group control signals enabling the user devices of the second group to emit communication signals such that these communication signals arrive at the base station with the second polarization.

According to a third aspect of the subject matter disclosed herein there is provided a computer program product which enables at least one microprocessor to carry out the method according to the second aspect or an embodiment thereof.

According to a fourth aspect of the subject matter disclosed herein, there is provided a user device for communication with a base station unit, the user device comprising (1) an antenna unit with adjustable polarization, and (2) a device controller for controlling the antenna unit in response to the control signals.

According to an illustrative embodiment, the device controller, in response to the control signals, may adjust the polarization of the antenna unit so as to emit communication signals with a predetermined device emitting polarization.

According to another illustrative embodiment, the device controller, in response to the control signals, may adjust the polarization of the antenna unit so as to receive communication signals with a predetermined device receiving polarization.

According to a further illustrative embodiment, the device receiving polarization is the same as the device emitting polarization. According to other embodiments, the device receiving polarization is different from the device emitting polarization.

According to an illustrative embodiment, an antenna unit with adjustable polarization is realized by a plurality of antenna elements of different polarization, wherein one of the antenna elements is selected by the device controller for adjusting the emitted communication signals to the polarization corresponding to this selected antenna element.

According to another illustrative embodiment, an antenna unit with adjustable polarization is realized by a variable power divider. According to an embodiment, the variable power divider allows to adjust the ratio of first and second polarization of the emitted communication signals.

According to an illustrative embodiment where the user devices employ polarization adaption, an antenna unit of the user devices is realized with a single RF frontend. This provides for reduced costs and reduced power consumption compared to user devices having two RF frontends. According to a further embodiment, the user device has only a single antenna unit with a single RF frontend and a single antenna element.

According to an embodiment, the device controller controls the antenna unit in response to the control signals so as to emit communication signals which arrive at the base station unit with a predetermined base receiving polarization. For example, the control signals may originate from a base station unit and may contain information about the polarization of the communication signals which the base station unit received from the user device. This feed-back from the base station unit allows the device controller to adjust the polarization to a predetermined device emitting polarization such that the communication signals emitted with the predetermined emitting polarization arrive at the base station unit with the desired first or second polarization.

It should be noted that the predetermined emitting polarization may be identical with the first polarization or with the second polarization, i.e. the receiving polarization at the base station unit. The emitting polarization may correspond to the receiving polarization e.g. in case of a transmission in line of sight. However, if the emitted communication signals are scattered multiple times on different surfaces, the emitting polarization may have to be different from the receiving polarization.

According to a fifth aspect of the subject matter disclosed herein, there is provided a method of operating a user device, the method comprising adjusting, in response to control signals, a polarization of an antenna unit to a predetermined device polarization.

According to an embodiment, the predetermined device polarization is a predetermined emitting polarization and the method further comprises emitting communication signals with the predetermined device emitting polarization.

According to another embodiment, the predetermined device polarization is a predetermined receiving polarization and the method further comprises receiving communication signals with the predetermined device receiving polarization.

According to a sixth aspect of the subject matter disclosed herein, there is provided a computer program product which enables at least one microprocessor to operate a user device according to the fifth aspect of the invention or an embodiment thereof.

In view of the above, according to a seventh aspect of the invention, a communication system comprising a base station unit according to the first aspect of the invention or an embodiment thereof and at least two user devices according to the second fourth aspect or an embodiment thereof.

According to an eighth aspect of the invention, a method of operating a communication system comprises operating a base station unit according to the second aspect of the invention or an embodiment thereof and operating at least two user devices according to the fifth aspect or an embodiment thereof.

According to an illustrative embodiment of one the above disclosed aspects one of the first polarization and the second polarization is a horizontal polarization and the other is a vertical polarization.

According to another illustrative embodiment of one the above disclosed aspects one of the first polarization and the second polarization is a clockwise circular polarization and the other is a counterclockwise circular polarization.

In the following there will be described exemplary embodiments of the present invention with reference to a communication system and a method of operating a communication system. It has to be pointed out that of course any combination of features relating to different subject matters is also possible.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 schematically shows a communication system in accordance with illustrative embodiments of the subject matter disclosed herein;
Fig. 2A schematically shows an antenna pattern of a conventional base station;
Fig. 2B schematically shows an antenna pattern in accordance with illustrative embodiments of the subject matter disclosed herein;
Fig. 3A to Fig. 3C schematically show details of a communication system in accordance with further illustrative embodiments of the subject matter disclosed herein;
Fig. 4A to Fig. 4C schematically show details of a communication system in accordance with further illustrative embodiments of the subject matter disclosed herein;
Fig. 5A to Fig. 5C schematically show details of a communication system in accordance with further illustrative embodiments of the subject matter disclosed herein;
Fig. 6A to Fig. 6D schematically show details of a user device in accordance with further illustrative embodiments of the subject matter disclosed herein;
Fig. 7 schematically shows an up-link protocol in accordance with further illustrative embodiments of the subject matter disclosed herein.

### Detailed Description

The illustration in the drawings is schematic. It is noted that in different figures, similar or identical elements are provided with the same reference signs or with reference signs, which are different from the corresponding reference signs only within the first digit.

The framework of the present invention falls into the area of MIMO (= multiple input multiple output) systems and specifically of cooperative antenna systems like the well known joint transmission approach. MIMO systems promise significant performance gains in terms of capacity spectral efficiency and peak data rates, which is the reason that MIMO will be an integral part of 3GPP LTE Release 8.

With space division multiple access (SDMA) two or more user devices, e.g. user terminals, user equipment, etc, build up a virtual MIMO system where two user devices are transmitting simultaneously on the same time and frequency resource.

For conventional MIMO systems, a fundamental decision is required, i.e. whether parallel or cross polarized antennas are being used. For parallel polarized antenna elements - e.g. in case of a □/2 spacing, where □ is the wavelength of the radiation used for transmission - techniques like beamforming might be used, while cross polarized antennas are advantageous in line of sight (LOS) scenarios where spatial multiplexing should be applied due to the relative small cross talk between the two transmission streams.

According to an exemplary embodiment disclosed herein, an optimized 4x4 MIMO SDMA implementation is presented which allows to achieve similar gains like conventional 4x4 MIMO systems with reduced complexity and with the possibility to build up the 4x4 MIMO system by the cooperation of two base stations, e.g. two node-B (base stations of a Universal Mobile Telecommunications System (UMTS)), each being of order 2x2, and with very limited information exchange between these base stations. Additionally, according to an embodiment, at least for the uplink solution, user device should have only one RF frontend.

A conventional 4x4 system uses four transmit and four receive antennas and performs a joint processing over all four user devices at the base station.

According to an embodiment of the invention, a 4x4 MIMO system is separated into two orthogonal 2x2 MIMO systems. According to a further embodiment, the 2x2 MIMO systems are multi-user 2x2 MIMO systems.

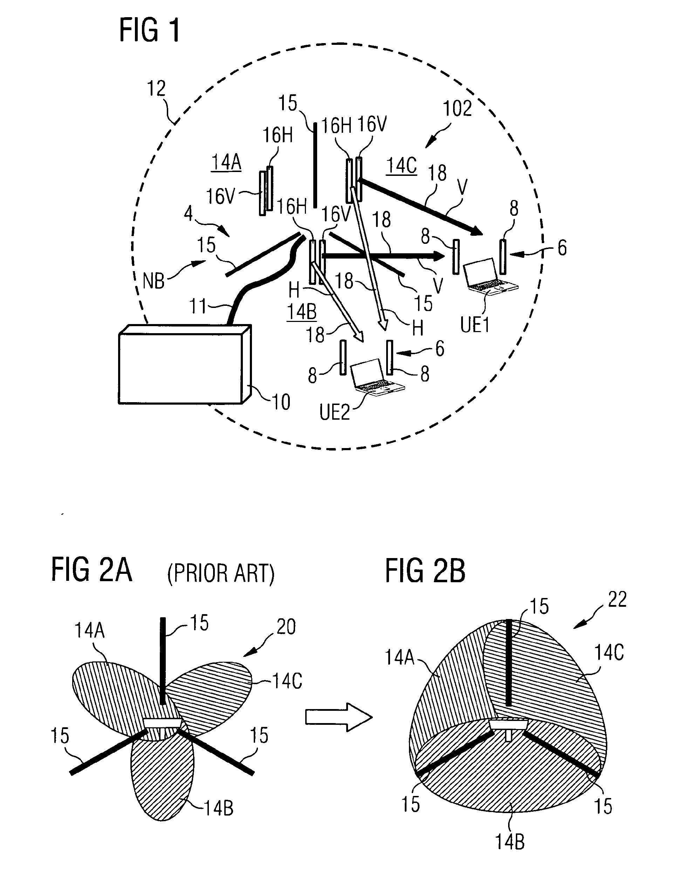

Figure 1 shows a communication system 102 having a base station unit 4 and a first user devices UE1 and a second user device UE2, each of which has an device antenna unit 6 with two device antenna elements 8. A user device may be of any suitable kind e.g. a cellular (mobile) phone, a modem adapter of any kind of computer, such as a personal computer, a notebook, a portable computer such as a personal digital assistant (PDA), a network adapter of any kind of computer, such as the aforementioned examples of computers, etc. A base station may be e.g. a node-B in the sense of an UMTS system.

The base station unit 4 comprises one base station NB. The base station NB has implemented therein a base controller 10 for grouping the two user devices UE1, UE2 into (1) a first group of a first user devices and a second group of user devices. In the illustrated example, the first group of user devices comprising the first user device UE1, communication signals of which are received by the base station unit 4 with a first polarization, e.g. a vertical polarization V. The second group of user devices comprises the second user device UE2, communication signals of which are received by the base station unit 4 with a second polarization different from the first polarization. In the communication system 2 of Fig. 1, the second polarization is a horizontal polarization H. The base controller 10 is coupled to the base station NB via an appropriate signal path 11.

According to an illustrative embodiment, shown in Fig. 1, the cell 12 covered by the base station unit 4 is divided into three sectors 14A, 14B, 14C, indicated at 15 in Fig. 1. With each sector 14A, 14B, 14C are associated two sector antenna elements 16H, 16V having orthogonal polarization.

According to an illustrative embodiment shown in Fig. 1, a MIMO channel is established between two pairs of sector antenna elements 16H, 16V and the two pairs of device antenna elements 8 of the two user devices UE1, UE2. The MIMO channel is of order 4x4, having four antenna elements 16H, 16V feeding communication signals 18 into the channel and four antenna elements 8 receiving communication signals 18 out of the channel.

When several versions of a communication signal are received at a receiver, e.g. the device antenna elements 8, the problem is to extract the transmitted information from the received communication signal. One particular problem is the interference from different user devices. One way of handling this problem is to allow interference from different mobile stations and to improve the ability of the receiver to reject the interfering signals. One way of interference rejection is to use the cross-covariance between the noise in diversity channels in an equalizer, the so-called interference rejection combining (IRC). User devices having two or more antennas, like the first and second user devices UE1, UE2 shown in Fig. 1, can use the IRC. According to an illustrative embodiment, optimized interference rejection combining is used, wherein the interference cancellation gain is maximized.

According to an illustrative embodiment the grouping of the at least two user devices into first and second user devices comprises selecting user devices, signals of which are received by the base station unit with the first polarization, as the first group of user devices and selecting user devices, signals of which are received by the base station unit with the second polarization, as the second group of user devices. For example, in an embodiment where the first polarization is a vertical polarization and the second polarization is a horizontal polarization: If the polarization of the antenna of the first user device UE1 is already vertical, the base controller will group the first user device UE1 into the first group of vertical user devices, signals of which are received by the base station unit 4 with a vertical polarization. Similarly, if the polarization of the antenna of the second user device UE2 is already horizontal, the base controller will group the second user device UE2 into the second group of user devices, signals of which are received by the base station unit with a horizontal polarization.

The more user devices are communicating with a base station unit, the higher the likelihood that there are at least one user device having the first polarization and at least one user device having the second polarization.

The above described checking for polarity and selection of user devices of desired polarity may be employed with any number of user devices, since there is always a certain likelihood for user devices already having the desired polarization.

While according to the above described embodiment the user devices are grouped without adjusting the polarization of the user devices, according to another illustrative embodiment, the grouping of the user devices may involve active adjustment of the polarization of the user devices.

In an embodiment which employs user device polarization adjustment, the grouping of user devices may be performed according to any predetermined grouping scheme, since any misaligned polarization is adjusted after the mere grouping process. For example, in the mere grouping process, the user devices may be numbered and user devices having an even number may be taken as the first user devices and the user devices having an odd number may be taken as the second user devices. Another grouping scheme includes analysis of the present polarization of the user devices and the grouping is performed such that minimal adjustments to the respective polarization of the user devices are necessary to obtain the desired first and second polarization for all user devices in the first group and the second group, respectively.

According to an embodiment, after the mere grouping process, the polarization of the user devices is adjusted if necessary. According to another embodiment, the polarization of the user devices is adjusted in any way and no checking of the present polarization of the user device is carried out.

According to an illustrative embodiment, the grouping of the at least two user devices UE1, UE2 into first group and the second group comprises emitting to the user devices of the first group control signals enabling the user devices of the first group to emit communication signals such that these communication signals arrive at the base station unit with the first polarization, and emitting to the user devices of the second group control signals enabling the user devices of the second group to emit communication signals such that these communication signals arrive at the base station unit with the second polarization.

Enabling the user devices of the first group or the second group to emit communication signals such that these communication signals arrive at the base station with the respective first or second polarization may include providing the user device with polarization information which might be used by the user device to adjust the polarization of its antenna element(s) such that the communication signals of the user device arrive at the base station unit 4 with the respective first or second polarization V,H. For example, the polarization of the communication signals of a user device UE1, UE2 arriving at the base station unit may be fed back to the respective user device which in response hereto may adjust the polarization of the communication signals emitted to the base station unit 4. According to other embodiments, other feed-back schemes may be used.

For establishing the MIMO channel, according to an illustrative embodiment, the sector overlap of antenna elements of base station unit may be increased compared to conventional base station units. This is illustrated in Fig. 2A and Fig. 2B, wherein Fig. 2A shows a conventional antenna pattern shown in Fig. 2A covers about 90 degrees, leading to a small sector overlap 20 of the antenna elements associated with the respective sectors 14A, 14B, 14C. The division of the sectors is indicated at 15. In contrast to the conventional system shown in Fig. 2A, Fig. 2B shows an enlarged antenna pattern with a coverage of greater than 120 degrees, in accordance with an illustrative embodiment of the subject matter disclosed herein. An enlarged antenna pattern covering a range larger than 110 degrees, and according to a further embodiment a range larger than 130 degrees, leads to an increased sector overlap which is beneficial for the establishment of a MIMO channel according to illustrative embodiments.

The various embodiments employed in the communication system shown in Fig. 1 and Fig. 2 have the advantage that existing sites, in particular existing base stations may be reused for the implementation of the described embodiments. Further, a 4x4 MIMO transmission/reception is possible without implementation of further RF frontends or antenna elements at the base stations NB as well as at the user devices UE1, UE2. Due to the larger antenna pattern the area/sector size where the MIMO gains can be realized can be increased.

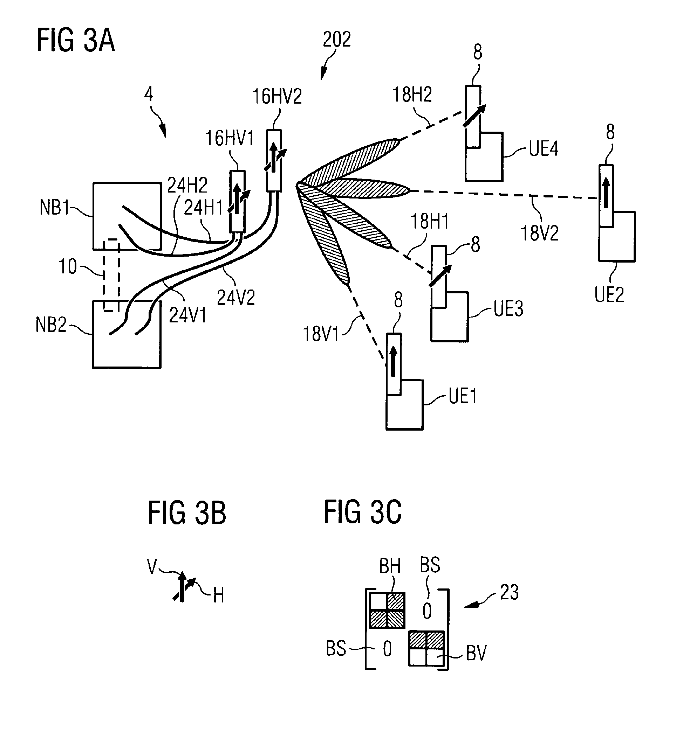

Fig 3A to Fig. 3C show another communication system 202 in accordance with illustrative embodiments of the subject matter disclosed herein.

According to an illustrative embodiment, the base station unit 4 comprises at least two base stations, e.g. two base stations NB1, NB2 as shown in Fig. 3A. According to another illustrative embodiment, the user devices have only one device antenna element 8, i.e. in a 4x4 MIMO system communication with four user devices UE1, UE2, UE3, UE4 may be performed simultaneously in each time slice. The four user devices UE1, UE2, UE3, UE4 are grouped into a first group comprising the user devices UE3, UE4 and a second group comprising the user devices UE1, UE2. According to an embodiment, the four device antenna elements 8 are supported by space division multiple access (SDMA). According to other embodiments, other spatial dividing methods may be used.

According to an illustrative embodiment, the 4x4 MIMO system is separated into two orthogonal 2x2 multi-user MIMO systems. An example of such a system is shown in Fig. 3A. Herein, two base stations, a first base station NB1 and a second base station NB2 are provided. In another embodiment the two base stations NB1, NB2 are collocated, i.e. are disposed at the same site. According to a further embodiment, each base station NB1, NB2 comprises one cross polarized base antenna element 16HV1, 16HV2. The two base stations have implemented therein a base controller 10 which controls the grouping of the user devices UE1, UE2, UE3, UE4 into the first group and the second group. Fig. 3c shows the resulting block diagonal channel matrix 23 having block diagonal elements BH which correspond to the horizontally polarized signal streams 18H1, 18H2. The block diagonal channel matrix 23 further comprises block diagonal elements BV corresponding to the vertically polarized signal streams 18V1, 18V2. The side elements BS are zero.

The first base station NB1 provides input communication signals 24H1 and 24H2 to be transmitted with horizontal polarization to the two cross-polarized antenna elements 16HV1, 16HV2. In response hereto, the cross polarized antenna elements 16HV1, 16HV2 emit horizontally polarized communication signals 18H1, 18H2 to the user devices UE3, UE4 of the first, horizontally polarized group. The second base station NB2 provides communication signals 24V1, 24V2 to be transmitted with vertical polarization V to the two cross-polarized antenna elements 16HV1, 16HV2. In response hereto, the cross polarized antenna elements 16HV1, 16HV2 emit vertically polarized communication signals 18V1, 18V2 to the user devices UE1, UE2 of the second, vertically polarized group. The exemplary direction of the horizontal polarization H and the vertical polarization V are indicated in Fig. 3B.

According to other illustrative embodiments, other polarizations, different from a horizontal polarization H and a vertical polarization V are used.

According to an illustrative embodiment, the grouping of the user devices comprises information exchange between two base stations NB1, NB2. For example, the base stations NB1, NB2 may communicate to the base controller 10 the actual polarization of the user devices UE1, UE2, UE3, UE4 sending up-link communication signals (not shown in Fig. 3A for sake of clarity) to the base station unit 4. According to an embodiment, the base controller 10 selects, in response hereto, the user devices UE3, UE4 the received up-link communication signal polarization of which is close to the first polarization V as the first user devices. Likewise, the base controller 10 may select the user devices UE1, UE2 the received up-link communication signal polarization of which is close to the second polarization V as the second user devices.

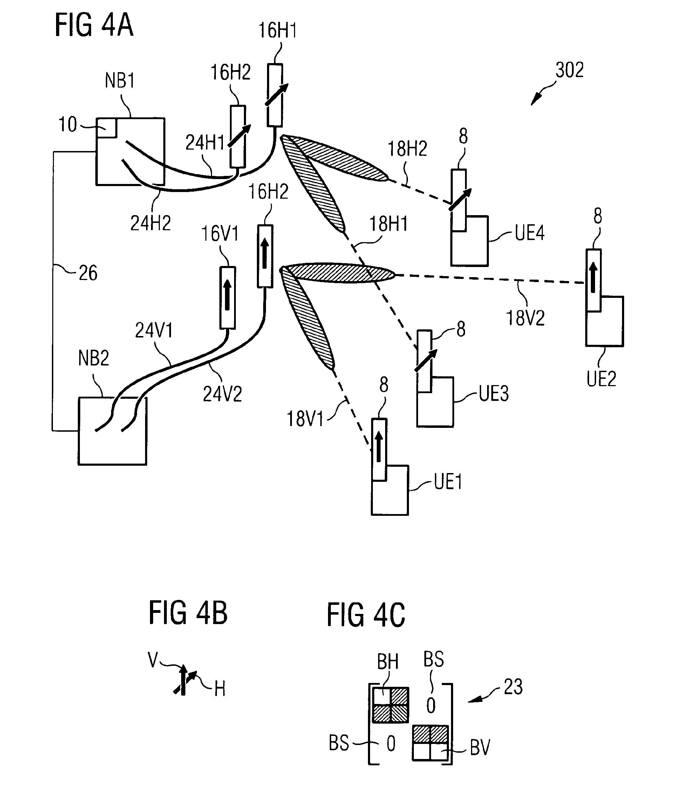

Fig. 4A to Fig. 4C show a further communication system 302 in accordance with illustrative embodiments of the subject matter disclosed herein.

The communication system 302 is in some respects similar to the communication system 202 shown in Fig. 3A to Fig. 3C, the details of which are not repeated here.

The communication system 302 comprises two base stations NB1, NB2 disposed at different sites. According to an embodiment, the two base stations NB1, NB2 are disposed in different sectors (see Fig. 1 for comparison). According to another embodiment, the two base stations NB1, NB2 are located on the same aerial mast. According to other embodiments the two base stations may be located on different aerial masts.

According to an illustrative embodiment, the base controller 10 is included in the first base station NB1. A communication link 26 is provided which according to an embodiment allows communication of the two base stations NB1, NB2. According to another embodiment, the communication link 26 allows communication of the second base station NB with the base controller 10.

According to an illustrative embodiment, each base station NB1, NB2 has two antenna elements. According to an illustrative embodiment, the first base station NB1 has two antenna elements 16H1, 16H2 of the same polarization, horizontal in the example shown in Fig. 4A. In response to input communication signals 24H1, 24H2, the two antenna elements transmit horizontally polarized communications signals 18H1, 18H2 to the respective user devices UE3, UE4. According to a further embodiment, the second base station NB2 has two antenna elements 16V1, 16V2 of the same polarization, vertical in the example shown in Fig. 4A. In response to input communication signals 24V1, 24V2, the two antenna elements transmit vertically polarized communications signals 18V1, 18V2 to the respective user devices UE1, UE2.

Fig. 4B indicates the direction of the horizontal polarization H and the direction of the vertical polarization V.

Fig. 4C shows the block diagonal channel matrix 23 corresponding to the communication system 302 of Fig. 4A, having block diagonal elements BH which correspond to the horizontally polarized signal streams 18H1, 18H2. The block diagonal channel matrix 23 further comprises block diagonal elements BV corresponding to the vertically polarized signal streams 18V1, 18V2. The side elements BS are zero. Each block diagonal element BH, BV has four subelements, corresponding to the respective 2x2 subsystem. A first 2x2 subsystem is established by the antenna elements 16H1, 16H2 of the first base station NB1 and the corresponding device antennas 8 of the user devices UE3, UE4 of the first group. A second 2x2 subsystem is established by the antenna elements 16V1,16V2 of the second base station NB2 and the corresponding device antennas 8 of the user devices UE1, UE2 of the second group.

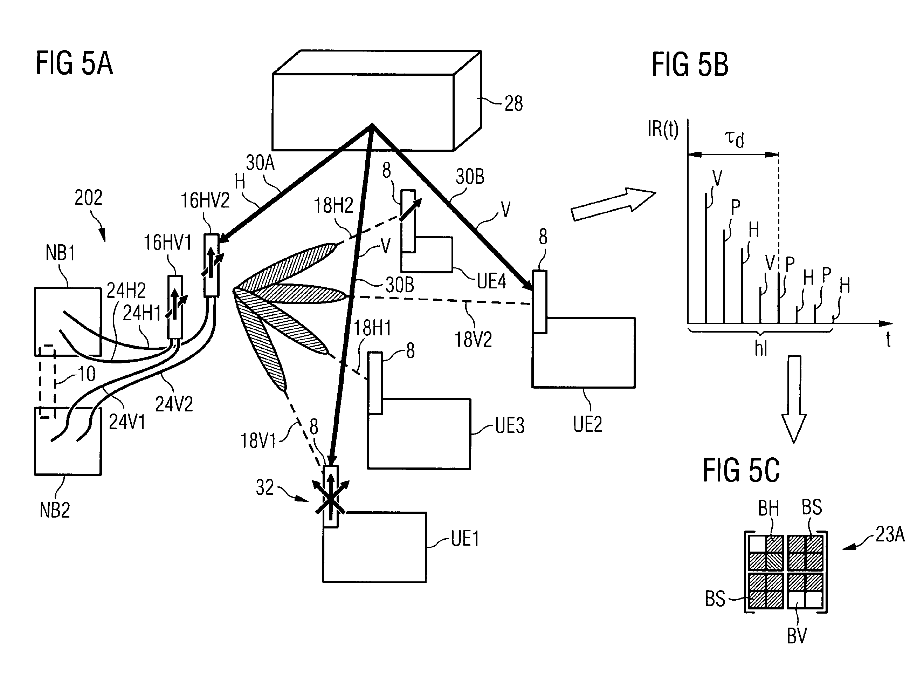

While Fig. 3A to Fig. 4C show a scenario without multipath reflections, Fig. 5A to Fig. 5C deal with such a general scenario having multipath reflections.

Multipath is the propagation phenomenon that results in radio signals reaching the receiving antenna by two or more paths. Multipath may be caused by atmospheric ducting, ionospheric reflection and refraction, and reflection from terrestrial objects, such as mountains and buildings. The effects of multipath include e.g. constructive and destructive interference, phase shifting of the signal, etc.

Fig. 5A shows the communication system 202 of Fig. 3A, details of which are not repeated here. In addition to the scenario shown in Fig. 3A, Fig. 5A comprises an obstacle 28, e.g. a building, on which part of the radiation transmitted by the antenna elements 16HV1, 16HV2 is reflected. For sake of clarity, only a single reflected path is shown in Fig. 5A. Indicated at 30A is a horizontally polarized communication signal 18H2 which is not received in line of sight by the dedicated user device UE4 but is reflected by the obstacle 28, thereby yielding reflected multipath components 30B. The reflected the multipath component 30B exhibits a polarization, e.g. a vertical polarization V in the depicted example, that differs from the initial polarization, i.e. a horizontal polarization H in the depicted example. In a general scenario multiple reflections of multiple communications signals take place, leading to a more or less random superposition of polarizations at a user device, e.g. as indicated at 32 for the user device UE1 in Fig. 5A.

The multipath components 30B and, if any, the unreflected communication signal 18V1 arrive at different times at the user device UE1. Further, due to frequency selective reflections and due to frequency selective interference between several multipath components at the user devices UE1, UE2, UE3, UE4, a frequency selective polarization may be generated at the user device. This scenario is schematically illustrated in Fig. 5B, where the impulse response IR(t) is drawn versus the time t. The multipath conditions are usually characterized by the multipath time hL, which is the time interval between the first and the last received impulses, and the characteristic time □d, which characterizes the decrease of the impulse response IR(t) with time t. The different components of the impulse response IR(t) exhibit different polarizations, indicated at H, V, and P in Fig. 5B, wherein P is exemplary for any random polarization.

The impulse response exemplarily shown in Fig. 5B leads to crosstalk as indicated in Fig. 5C, i.e. the side blocks BS of the channel matrix 23A are non-zero, in contrast to the channel matrix 23 of Fig. 3C, corresponding to the scenario illustrated in Fig. 3A.

Without compensation of the multipath reflections, the user device will have a randomly and time varying polarized device antenna elements 8.

While above (virtual) 4x4 MIMO systems have been discussed, it should be understood that generally the concept and its embodiments disclosed herein can be extended to higher number of antennas than 4x4 systems in an analogue manner. The concept can also be used in combination with spatial multiplexing, i.e. single user MIMO.

The communication systems described with regard to Fig. 3A to Fig. 5C have the following advantages:
- reuse of existing hardware as far as possible,
- very fast implementation of 4x4 MIMO with the advantages of higher capacity and spectral efficiency based on conventional 2x2 MIMO system implementations
- According smaller complexity for realization as 4x4 MIMO requires the parallel implementation of 4 OFDM(A) chains plus the MIMO processing for 4x4 which includes a matrix inversion. The processing effort for matrix inversion increases non-linearly, with cubic order for NxN matrices, so that the number of involved antenna elements has significant impact.
- The antenna elements with variable polarization can be implemented with relative low effort at the user device compared to conventional 2x2 MIMO user devices, which would require two costly and battery power consuming RF-frontends.
- Due to the active optimization of the overall radio channel also in case of a limited number of user devices sub-block diagonalization of the radio channel will be possible. It should be emphasized that conventional block diagonalization exploits full cooperation between all antennas at the base station, in contrast to respective embodiments disclosed herein.

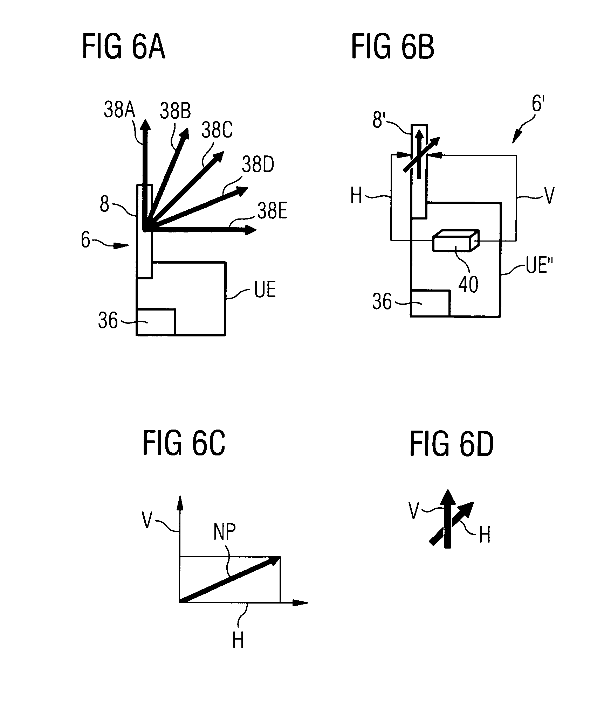

Fig. 6A shows a user devices UE in accordance with illustrative embodiments of the subject matter disclosed herein. The user device UE comprises an antenna unit 6 having an antenna element 8 with adjustable polarization. The user device UE further comprises a device controller 36 for controlling the antenna element 8 in response to control signals (not shown).

The antenna element 8 comprises a plurality of antenna subelements of different polarization, indicated at 38A, 38B, 38C, 38D, 38E, wherein one of the antenna subelements is selected by the device controller 36 for adjusting the emitted communication signals to the polarization corresponding to this selected antenna subelement.

According to an illustrative embodiment, the device controller 36, in response to the control signals, adjusts the polarization of the antenna element 8 so as to operate with the predetermined polarization.

Fig. 6B shows a user device UE' in accordance with illustrative embodiments of the subject matter disclosed herein. The user device UE' comprises an antenna unit 6' with an antenna element 8' with adjustable polarization and a device controller 36 for controlling the antenna element 8' in response to control signals (not shown). The antenna unit 6' comprises an adjustable a variable power divider which allows to adjust the ratio of a first polarization H and second polarization V. In this way the antenna element 8' may be adjusted to any desired net polarization NP, as shown schematically in Fig. 6C. Fig. 6D shows the directions of the exemplary horizontal polarization H and vertical polarization V.

According to an illustrative embodiment where the user devices UE, UE' employ polarization adaption, an antenna unit 6, 6' of the user devices is realized with a single RF frontend. This provides for reduced costs and reduced power consumption compared to user devices having two RF frontends.

It should be noted that each of the user devices UE1, UE2, UE3, UE4 discussed above may be designed in accordance with one of the user devices UE, UE' shown in Fig. 6A to Fig. 6C.

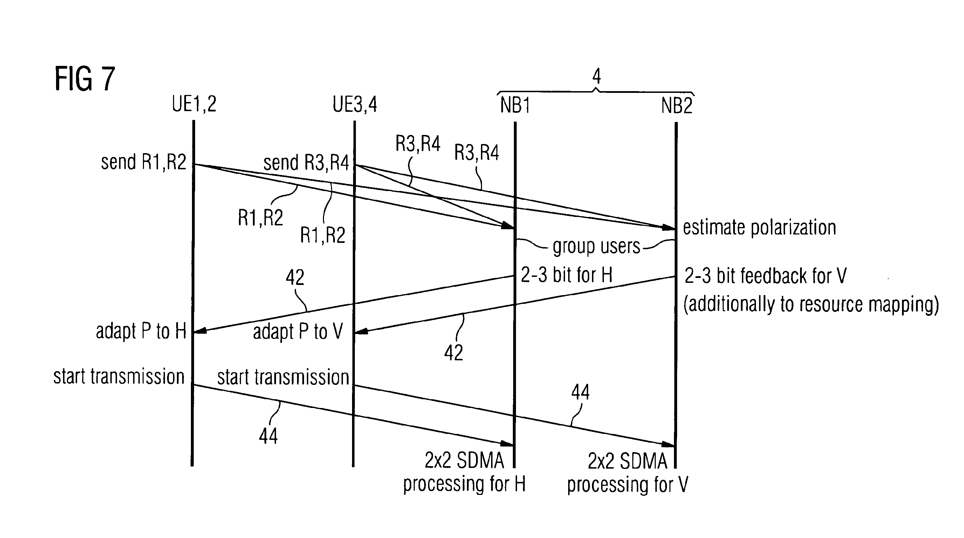

Fig. 7 schematically illustrates a communication scenario and a protocol proposal for the communication of a base station unit and a user device in accordance with illustrative embodiments disclosed herein.

According to an embodiment, the device controller 36 controls the antenna unit 6, 6' and hence the antenna elements 8, 8' in response to the control signals so as to emit communication signals which arrive at the base station unit NB, NB1, NB2 with a predetermined base receiving polarization.

For an up-link to the base station unit 4 the user devices UE1, UE2, UE3, UE4 may transmit orthogonal reference signals R1, R2, R3, R4 to the base station unit 4, which comprises two base stations NB1, NB2 in the exemplary embodiment. According to an embodiment, the reference signals may be comprised of four orthogonal pilot sequences. The base stations NB1, NB2 estimate the received polarization by one or more of the following:
a) based on reference signals with V and H polarization
b) by combining measurements from the first base station NB1 and the second base station NB2
c) by dual polarized base station receive antennas for each base station

According to other embodiments, other ways of estimating the received polarization may be employed.

The base controller 10 of the base station unit 4, or, according to an embodiment, the first base station NB1 and the second base station NB2 group the user devices in vertical and horizontal polarized user devices. The grouping may be performed as disclosed above, e.g.
a) in a predetermined way, e.g. into odd and even user devices;
b) by exchange of information between the first base station NB1 and the second base station NB2.

Taking the estimated polarization and the grouping of the user devices into the first group and the second group into account, the base station unit 4, e.g. the base controller may determine the required polarization adaption for each user device. This required polarization adaption, e.g. a 2-3 bit feedback for polarization V and a 2-3 bit feedback for polarization H is fed back to the respective user devices UE1, UE2 and UE3, UE4, as control signals 42 in response to which the device controller 36 adjusts the antenna polarization of the antenna unit 8, 8'. After adaption of the antenna polarization of the user devices, the communication signals 44 emitted by the respective user device UE1, UE2, UE3, UE4 with adapted antenna polarization, i.e. with an predetermined emitting polarization, arrive at the base station unit 4 and, in particular at the respective base station NB1, NB2, with the desired first or second polarization.

It should be noted that the predetermined emitting polarization may be identical with the first polarization or with the second polarization, i.e. the receiving polarization at the base station unit. The emitting polarization may correspond to the receiving polarization e.g. in case of a transmission in line of sight. However, if the emitted communication signals are scattered multiple times on different surfaces, the emitting polarization may have to be different from the receiving polarization.

According to embodiments of the invention, any control component or logic component of the base station unit or of the user device, e.g. the base controller or the device controller are provided in the form of respective computer program products which enable a processor to provide the functionality of the respective elements as disclosed herein. According to other embodiments, any control component or logic component of the base station unit or of the user device, e.g. the base controller or the device controller may be provided in hardware. According to other - mixed - embodiments, some components or parts thereof may be provided in software while other components or parts thereof are provided in hardware.

A Software or a computer programm product referred to herein may be a full release or an suitable update to an existing release.

According to illustrative embodiments, beamforming techniques may be used to change the directionality of the communication signals emitted by antenna elements, i.e. to increase the intensity of the communication signals at the respective user device by generation of a predetermined interference of the communication signal. Beamforming usually involves control of the phase and, according to some embodiments, the amplitude of the communication signal at each of an antenna array comprising at least two antenna elements.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate at least some of the above described embodiments of the present invention one can state:

In accordance with illustrative embodiments, a novel MIMO system has been disclosed according to which the user devices are grouped into a first group of user device communication signals of which are received by a base station unit with a first polarization and a second group of user devices communication signals of which are received by the base station unit with a second polarization. According to an illustrative embodiment, a virtual 4x4 MIMO system has been presented which is comprised of two 2x2 MIMO systems, two orthogonal 2x2 MIMO systems in another embodiment. Each of the orthogonal 2x2 MIMO systems may be operated at a single polarization, wherein the two communication streams are divided by space division multiple access or any other suitable space division method. The respective polarization of the user devices may be initially present or may be adapted to the desired polarization. To this end, a user device with an antenna unit with adjustable polarization has been proposed. The proposed base station unit and user device provide high efficiency and low complexity.

### List of reference signs:

- 4: base station unit
- 6, 6': device antenna unit
- 8: device antenna element
- 10: base controller
- 11: signal path
- 12: cell
- 14A,: 14B, 14C sectors
- 15: indicates sector boundary
- 16H,: 16V sector antenna elements
- 16H1,: 16H2 horizontally polarized antenna element
- 16V1,: 16V2 vertically polarized antenna element
- 16HV1,: 16HV2 cross polarized base station antenna elements
- 18: communication signals emitted by base station
- 18H1,: 18H2 horizontally polarized signal stream
- 18V1,: 18V2 vertically polarized signal stream
- 20: conventional antenna pattern
- 22: enlarged antenna pattern
- 23: channel matrix
- 24H1,: 24H2 input communication signals (horizontal polarization)
- 24V1,: 24V2 input communication signals (vertical polarization)
- 26: communication link
- 28: obstacle
- 30A: unreflected multipath component
- 30B: reflected multipath component
- 32: random superposition of polarizations
- 36: device controller
- 38A,: 38B, 38C, 38D, 38E antenna sub-elements of different polarizations
- 42: control signals
- 44: communication signal emitted by user device
- 102,: 202, 302 communication system
- BH: block diagonal element (horizontal polarization)
- BV: block diagonal element (vertical polarization)
- BS: side block element

NB, NB1, NB2 base station
H horizontal polarization
V vertical polarization
UE, UE', UE1, UE2, UE3, UE4 user device
IR(t) impulse response
t time

## Claims

1. A base station unit (4) for communication with at least two user devices (UE, UE', UE1, UE2, UE3, UE4), said base station unit comprising:
• a base controller for grouping said at least two user devices (UE, UE', UE1, UE2, UE3, UE4) into
o a first group of a first user devices (UE, UE', UE1, UE2, UE3, UE4), communication signals of which are received by said base station unit (4) with a first polarization (H, V); and
o a second group of second user devices (UE, UE', UE1, UE2, UE3, UE4), communication signals of which are received by said base station unit (4) with a second polarization (H, V) different from said first polarization (H, V).

2. The base station unit (4) according to claim 1, wherein said grouping said at least two user devices (UE, UE', UE1, UE2, UE3, UE4) comprises:
• selecting user devices (UE, UE', UE1, UE2, UE3, UE4), signals of which are received by said base station unit (4) with said first polarization (H, V) as said first group of user devices (UE, UE', UE1, UE2, UE3, UE4); and
• selecting user devices (UE, UE', UE1, UE2, UE3, UE4), signals of which are received by said base station unit (4) with said second polarization (H, V) as said second group of user devices (UE, UE', UE1, UE2, UE3, UE4).

3. The base station unit (4) according to claim 1, wherein said grouping said at least two user devices (UE, UE', UE1, UE2, UE3, UE4) comprises
• emitting to said user devices (UE, UE', UE1, UE2, UE3, UE4) of said first group control signals enabling said user devices (UE, UE', UE1, UE2, UE3, UE4) of said first group to emit communication signals such that these communication signals arrive at said base station unit with said first polarization (H, V); and
• emitting to said user devices (UE, UE', UE1, UE2, UE3, UE4) of said second group control signals enabling said user devices (UE, UE', UE1, UE2, UE3, UE4) of said second group to emit communication signals such that these communication signals arrive at said base station unit with said second polarization (H, V).

4. The base station unit (4) according to claim 1, further comprising:
• at least two base stations (NB1, NB2) communicating with said base controller.

5. A method of operating a base station unit (4) for communication with at least two user devices (UE, UE', UE1, UE2, UE3, UE4), said method comprising:
• grouping said at least two user devices (UE, UE', UE1, UE2, UE3, UE4) into
o a first group of a first user devices (UE, UE', UE1, UE2, UE3, UE4), communication signals of which are received by said base station unit (4) with a first polarization (H, V); and
o a second group of second user devices (UE, UE', UE1, UE2, UE3, UE4), communication signals of which are received by said base station unit (4) with a second polarization (H, V) different from said first polarization (H, V).

6. A computer program product which enables at least one microprocessor to carry out said method of claim 5.

7. A user device for communication with a base station unit (4), said user device (UE, UE', UE1, UE2, UE3, UE4) comprising:
• an antenna unit (6, 6') with adjustable polarization
• a device controller (36) for controlling said antenna unit (6, 6') in response to control signals (42) so as to emit communication signals (44) with a predetermined emitting polarization depending on said control signals (42).

8. The user device of claim 7, wherein
• said device controller (36) controls said antenna unit (6, 6') in response to said control signals (42) so as to emit communication signals (44) which arrive at said base station unit (4) with a predetermined receiving polarization.

9. A method of operating a user device (UE, UE', UE1, UE2, UE3, UE4), said method comprising:
• adjusting, in response to control signals (42), a polarization of an antenna unit (6, 6') to a predetermined emitting polarization;
• emitting communication signals (44) with said predetermined emitting polarization.

10. A computer program product which enables at least one microprocessor to operate a user device (UE, UE', UE1, UE2, UE3, UE4) according to claim 9.

11. A communication system comprising a base station unit (4) according to claim 1 and at least two user devices (UE, UE', UE1, UE2, UE3, UE4) according to claim 7.
